# EUROPEAN PATENT SPECIFICATION

(11) **EP 1 801 000 B1**
(45) Date of publication and mention of the grant of the patent: **09.03.2011**
(21) Application number: 05776760.0
(22) Date of filing: 31.08.2005
(51) Int. Cl.: B62D 25/20, B62D 21/02

(54) **VEHICLE BODY REINFORCEMENT STRUCTURE**
VERSTÄRKUNGSSTRUKTUR FÜR FAHRZEUGKAROSSERIE
STRUCTURE DE RENFORT DE CARROSSERIE DE VÉHICULE

(30) Priority: 03.09.2004 JP 2004290746
(43) Date of publication of application: 27.06.2007
(73) Proprietor: Nissan Motor Light Truck Co., Ltd., Saitama 362-0046 (JP)
(72) Inventor: TANAKA, Yukihiro, -chome, Ageo-shi, Saitama 3620046; (JP); MIURA, Tsuyoshi, -chome, Ageo-shi, Saitama 3620046; (JP); ISHII, Hideaki, -chome, Ageo-shi, Saitama 3620046; (JP); MATSUMOTO, Kohji, -chome, Ageo-shi, Saitama 3620046; (JP)
(74) Representative: Fleuchaus, Michael A.
(86) International application number: PCT/JP2005/015882
(87) International publication number: WO 2006/025438

(56) References cited:
- JP-A- 9 240 515
- JP-A- 10 236 342
- JP-A- 11 170 942
- JP-A- 2001 039 345
- JP-A- 2001 039 345
- JP-A- 2002 308 151
- JP-A- 2002 308 151
- JP-A- 2002 362 434
- JP-A- 2002 362 434
- US-A- 5 906 248

## Description

### TECHNICAL FIELD

The present invention relates generally to a chassis for a vehicle, and more particularly, relates to a vehicular chassis with a reinforced structure capable of ensuring a survival space available in a vehicular cab at an occurrence of a front collision due to, for example, a traffic accident. Hereinafter, the vehicular chassis with the reinforced structure will be referred to as "a chassis reinforcing structure" for the simplicity sake throughout the present specification.

### BACKGROUND ART

For example, Japanese Unexamined Patent Publication No. 1998 (H10)-138,757 (Patent reference 1) discloses a structure, in a cab-over vehicle, for withstanding impact with a reinforcing member which is usually referred to as an impact beam and is built in a door in a longitudinal direction thereof in order to assure a survival space available within a vehicle at the occurrence of a front collision.
As another example, Japanese Patent No. JP 2002-308151-A (Patent reference 2), discloses a cab floor structure for a cab-over vehicle with a reinforcing member for moderating the deformation of the cab floor due to a collision.
As yet another example, Japanese Patent No. 11-170942 A (Patent reference 3), which shows the preamble of claim 1, discloses a vehicle body structure for absorbing of and transferring impact energy to that chassis frame.
Patent reference 1: Japanese Unexamined Patent Publication No. 1998 (H08) 138757
Patent reference 2: Japanese Patent No. JP 2002-308151-A
Patent reference 3: Japanese Patent No. 11-170942 A

### DISCLOSURE OF THE INVENTION

### PROBLEMS TO BE SOLVED BY THE INVENTION

However, in case of the conventional reinforcing structure where the reinforcing member must be incorporated in the door as described above, the door is heavy, so that it requires an additional force to open and close the door, and further, there is a limitation of a layout of inner parts within the door, and furthermore, the door is thick, so that the usable space in vehicle could be reduced, or the like. Therefore, the conventional reinforcing structure brings about a limitation to designing of the chassis.

Therefore, in view of the above conventional problems, an object of the present invention is to provide a chassis reinforcing structure, without the above-described incorporation of the reinforcing member in the door, having a survival-space-ensuring capability which is equal to or more than that of the conventional structure with the built-in reinforcing member in the door.

### MEANS FOR SOLVING THE PROBLEMS

In accordance with the present invention, there is provided a chassis with reinforced structure (a chassis reinforcing structure) for a vehicular cab, which is provided with a reinforcing member comprising at least two bars arranged on a lower surface of a floor panel constituting a cab and are extended in a longitudinal directions of the chassis from a front portion of the floor panel to at least a position where a driver seat is mounted on the floor panel, wherein the chassis includes two side members disposed to be laterally separated from each other on the lower surface of the floor panel and to extend in the longitudinal direction of the chassis, and wherein the two bars are disposed to be laterally separated apart from each other, so that a portion from the front portion of the floor panel is reinforced with a planar portion of the floor panel defined between the two bars, and that the two bars are disposed on one edge portion of the floor panel in a lateral direction of the chassis, wherein the edge portion is on the outside of the side member.
Since the two bars are disposed to be separated apart from each other, a lower portion extending under a seat or seats on which a driver and/or a passenger sit is reinforced by a planar region of the floor panel defined between the two bars. As a result, it is possible to more efficiently improve the survival-space-ensuring capability at the occurrence of an offset collision. The bars may be disposed over the entire region from the front portion of the floor panel to the rear portion thereof. Preferably, the bars are disposed to be terminated at a position where the driver seat is mounted, so that a rear portion of the cab behind the terminated position simply forming the floor panel, may define a deformable region which is able to be relatively easily deformed. Accordingly, the deformable region defined in the rear portion of the cab behind the seat is able to behave as a crushable zone for absorbing mechanical impact at the occurrence of a collision or the like.

In accordance with an embodiment of the present invention, fixing portions for fixedly securing the bars onto the lower surface of the floor panel are provided to the front, central, and rear portions of each of the bars.

### EFFECT OF THE INVENTION

Due to the chassis reinforcing structure according to the present invention, since the bar is arranged on the floor panel and disposed to be extended therealong, it is possible to solve the problems or limitations of a conventional structure provided for a moving door having inner parts incorporated therein. In addition, at least a region corresponding to a lower portion under a driver's or passenger's seat or seats, that is, a region between the front portion of the floor panel to the position where the seat is mounted is able to be reinforced, so that it is possible to improve a structure capable of relatively strongly and rigidly resisting deformation of the cab for the driver or passenger, which is a characteristic of the cab-over vehicle.

Further, the bar or bars are disposed and extended to have the terminal end or ends thereof located at the position where the seat is mounted, and the rear portion of the cab behind the terminated position is able to behave as a crushable zone. Accordingly, it is possible to implement a reinforcing structure for a vehicle, particularly for a vehicular cab, in which an undesired impact applied to the vehicular cab may be absorbed by using the crushable zone and withstanding impact by using the bar, so that it is possible to more efficiently improve the survival-space-ensuring-capability.

### BRIEF DESCRIPTION OF THE DRAWINGS

Fig. 1 is a schematic cross sectional view showing a cab of a cabover vehicle provided with a chassis reinforcing structure according to the present invention; and
Fig. 2 is a bottom plan view showing the chassis reinforcing structure of an embodiment shown in Fig. 1 as viewed from a bottom of a floor panel.

### EXPLANATION OF REFERENCE SYMBOLS

- 1, 2, 3: Bar
- 4: Floor panel
- 5: Front cab mount
- 6: Rear cab mount
- S: Seat
- Z: Crushable zone

### BEST MODE FOR CARRYING OUT THE INVENTION

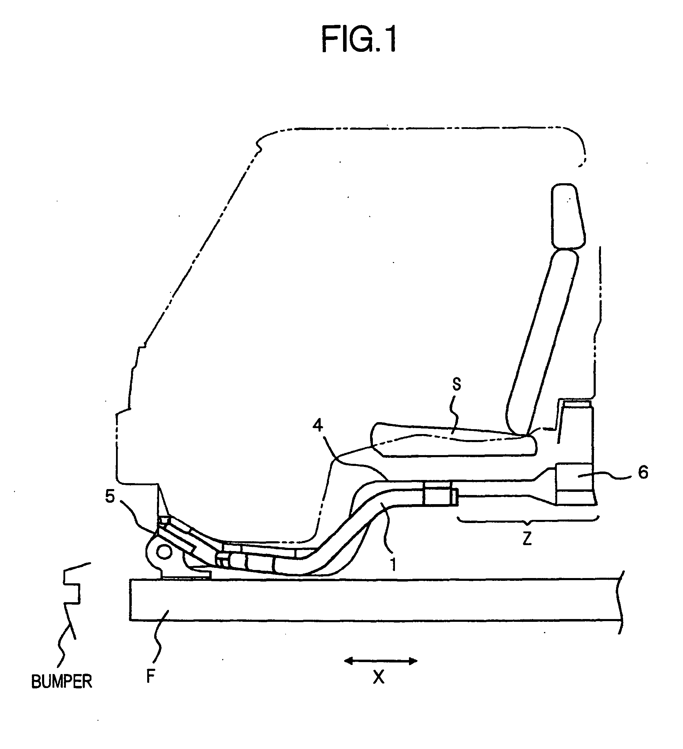

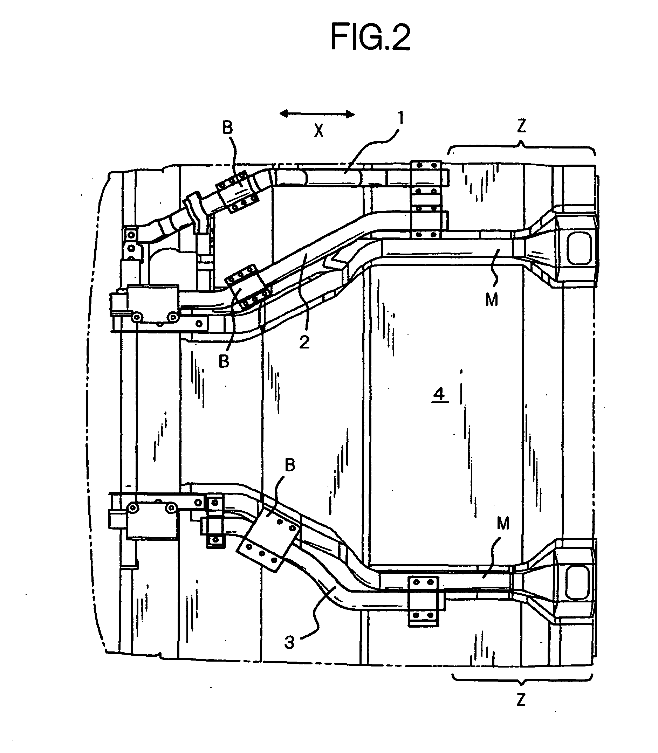

An embodiment of the present invention applied to a cab-over vehicle is described in detail with reference to Figs. 1 and 2.
In the embodiment, three bars including two bars 1 and 2 provided to a driver seat side and one bar 3 provided to a passenger seat side are attached to a lower surface of a floor panel 4, and the bars 1, 2, and 3 are disposed to extend from a front portion of the floor panel 4 to at least positions where the seats S (driver seat and passenger seat) are mounted on the floor panel 4, in a substantially longitudinal direction (indicated by arrow X). The bars 1, 2 and 3 may be, respectively, constructed with a steel member in a shape of rectangular bar, cylinder, pipe, or the like. In the embodiment, in terms of weight and cost, the pipe-shaped bars are used.

A front portion 5 of the floor panel 4 is pivotally supported on a chassis frame F by a front cab mount. Each of the bars 1, 2, and 3 is disposed to extend from the front portion 5 of the floor panel 4 to the position where the seat S is mounted and to be terminated at the position where the seat is mounted. Accordingly, a deformable region which can be more easily deformed than the front region where the bars 1, 2, and 3 are mounted is provided between the position where the bar is terminated and a rear portion 6 of the floor panel 4 having a rear cab mount, and therefore, the deformable region behaves as a crushable zone Z. Due to the crushable zone Z, at the occurrence of a front collision due to, for example, a traffic accident, the bars 1, 2, and 3 withstand axial impact, while the crushable zone Z is crushed to absorb the collision impact, so that it is possible to ensure a survival space available within the cab more efficiently.

Each of the bars 1, 2, and 3 is formed in a shape in compliance with a shape of a lower surface of the floor panel 4 and fixed by using brackets with bolts. The fixing method is not limited thereto, but welding or the like may be used. Particularly, in the embodiment, a central portion of each of the bars 1, 2, and 3, in addition to the front and rear portions thereof, is provided with a fixing portion by using a bracket B. In this manner, by providing the fixing portions in the middle portions of the bars, the bars 1, 2, and 3 become relatively hard to buckle at the time of a front collision, thereby contributing to ensuring a survival space.

In case of a cab-over truck, there is no bonnet protruding toward the forward direction of the truck, and thus, it is impossible to be designed to be used as a crushable zone. Therefore, it is relatively difficult to design a structure capable of ensuring a survival space. However, in the embodiment, the lower surface of the floor panel 4 is reinforced by using the bars 1, 2, and 3 in order to increase impact resistance, and in addition, the crushable zone Z is provided behind the bars in order to absorb impact. Therefore, it is possible to improve a survival-space-ensuring capability for a driver and a passenger seated on the seats.

The bars 1 and 2 provided to the driver seat side are disposed to be separated from each other, so that a lower portion of the driver seated on the driver seat S can be reinforced with a planar portion of the floor panel defined between the two bars 1 and 2. Accordingly, it is possible to more efficiently improve the survival-space-ensuring-capability at the occurrence of a front collision. Incidentally, the passenger seat may also be provided with two bars if there is no problem of cost.

Furthermore, two side members M are disposed to be laterally separated apart from each other on the lower surface of the floor panel 4 and to extend in the longitudinal direction of the vehicle, and therefore, a relatively effective impact-resistant structure can be provided between the two side members M. In the embodiment, the bars 1, 2, and 3 are disposed on outside of the side members M, so that relatively weak portions such as edge portions of the floor panel 4 in the lateral or widthwise direction of the chassis is able to be reinforced. Accordingly, it is also possible to enhance availability of the survival space in the cab mount at the occurrence of an offset collision due to a traffic accident and so on.

## Claims

1. A chassis with reinforced structure for a vehicle comprising at least two bars (1,2) which are arranged on a lower surface of a floor panel (4) constituting a cab and are disposed to extend in a longitudinal direction of the chassis between a front portion of the floor panel (4) to at least a position where a driver seat (S) is mounted on the floor panel (4), wherein the chassis includes two side members (M) disposed to be laterally separated apart from each other on the lower surface of the floor panel (4) and to extend in the longitudinal direction of the chassis,
**characterized in that**:
the two bars (1, 2) are disposed to be laterally separated apart from each other, so that a portion from the front portion of the floor panel (4) to at least the position where the driver seat(S) is mounted on the floor panel (4) is reinforced with a planar portion of the floor panel (4) defined between the two bars (1,2); and
the two bars (1,2) are disposed on one edge portion of the floor panel(4) in a lateral direction of the chassis, wherein the edge portion is on the outside of the side members (M).

2. The chassis with reinforced structure according to claim 1, **characterized in that** the bars (1,2) arc disposed to extend from the front portion and to terminate at the position where the driver seat (S) is mounted, thereby to allow a rear portion (Z) of the cab behind the terminating position of the bars (1,2) to be subjected to an easy deformation.

3. The chassis with reinforced structure according to claim 1, **characterized in that** fixing portions for fixedly securing the bars (1,2) onto the lower surface of the floor panel (4) arc provided to the front, central, and rear portions of each of the bars (1,2).

## Patentansprüche

1. Fahrgestell mit verstärkter Struktur für ein Fahrzeug, umfassend wenigstens zwei Stangen (1, 2), die an einer unteren Fläche einer Bodenplatte (4), die eine Fahrerkabine festlegt, angeordnet sind und so angeordnet sind, dass sie sich in Längsrichtung des Fahrgestells zwischen einem vorderen Abschnitt der Bodenplatte (4) zu wenigstens einer Position erstrecken, wo ein Fahrersitz (S) an der Bodenplatte (4) angebracht ist, wobei das Fahrgestell zwei Seitenelemente (M) aufweist, die so angeordnet sind, dass sie an der unteren Fläche der Bodenplatte (4) seitlich voneinander getrennt sind und sich in Längsrichtung des Fahrgestells erstrecken,
**dadurch gekennzeichnet, dass**
die zwei Stangen (1, 2) so angeordnet sind, dass sie seitlich voneinander getrennt sind, so dass ein Abschnitt von dem vorderen Abschnitt der Bodenplatte (4) zu wenigstens der Position, wo der Fahrersitz (S) an der Bodenplatte (4) angebracht ist, mit einem zwischen den zwei Stangen (1, 2) bestimmten ebenen Abschnitt der Bodenplatte (4) verstärkt ist; und
die zwei Stangen (1, 2) an einem Randabschnitt der Bodenplatte (4) in einer seitlichen Richtung des Fahrgestells angeordnet sind, wobei der Randabschnitt sich außen an den Seitenelementen (M) befindet.

2. Fahrgestell mit verstärkter Struktur gemäß Anspruch 1, **dadurch gekennzeichnet, dass** die Stangen (1, 2) so angeordnet sind, dass sie sich von dem vorderen Abschnitt erstrecken und an der Position enden, wo der Fahrersitz (S) angebracht ist, um **dadurch** zu ermöglichen, dass ein hinterer Abschnitt (Z) der Fahrerkabine hinter der Endposition der Stangen (1, 2) leichter Verformung unterliegt.

3. Fahrgestell mit verstärkter Struktur gemäß Anspruch 1, **dadurch gekennzeichnet, dass** Befestigungsabschnitte zum Festlegen der Stangen (1, 2) an der unteren Fläche der Bodenplatte (4) an den vorderen, mittleren und hinteren Abschnitten jeder der Stangen (1, 2) vorgesehen sind.

## Revendications

1. Un châssis avec structure renforcé pour un véhicule comprenant au moins deux barres (1,2) qui sont agencées sur une surface inférieure d'un panneau de plancher (4) constituant une cabine de conduite et sont disposés pour s'étendre dans une direction longitudinale du châssis entre la portion avant du panneau de plancher (4) vers au moins une position où le siège du conducteur (S) est monté sur le panneau de plancher (4) où le châssis inclut deux membres latéraux (M) disposés pour être séparés latéralement l'un de l'autre sur la surface inférieure du panneau de plancher (4) et pour s'étendre dans une direction longitudinale du châssis,
**caractérisé en ce que**
les deux barres (1,2) sont disposées pour être séparées latéralement l'une de l'autre, de sorte qu'une portion depuis la portion avant du panneau de plancher (4) à au moins la position où le siège du conducteur (S) est monté sur le panneau de plancher (4) est renforcée avec une portion planaire du panneau de plancher (4) définie entre les deux barres (1,2) ; et
les deux barres (1,2) sont disposées sur une portion de bord du panneau de plancher (4) dans une direction latérale du châssis où la portion de bord est sur l'extérieur des membres latéraux (M).

2. Le châssis avec structure renforcée selon la revendication 1, **caractérisé en ce que** les barres (1,2) sont disposées pour s'étendre depuis la portion avant et pour terminer à la position où le siège du conducteur (S) est monté, par là pour permettre à une portion arrière (Z) de la cabine de conduite derrière la position de fin des barres (1,2) d'être sujette à une déformation facile.

3. Le châssis avec structure renforcée selon la revendication 1, **caractérisé en ce que** des portions de fixation pour fixer de manière fixe les barres (1,2) sur la surface inférieure du panneau de plancher (4) sont fournies sur les portions avant, centrales et arrière de chacune des barres (1,2).
